(19) Europäisches Patentamt
European Patent Office
Office européen des brevets

(11) EP 0 864 576 A1

(12) **EUROPÄISCHE PATENTANMELDUNG**

(43) Veröffentlichungstag:
**16.09.1998 Patentblatt 1998/38**

(21) Anmeldenummer: **98103615.5**

(22) Anmeldetag: **02.03.1998**

(51) Int. Cl.$^6$: **C07F 9/46**, C07F 15/00, B01J 31/18, C07B 53/00, C07F 9/6568, C07F 9/655 // C07M7:00

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **10.03.1997 EP 97103963**
**23.01.1998 EP 98101128**

(71) Anmelder:
**F. HOFFMANN-LA ROCHE AG**
**4070 Basel (CH)**

(72) Erfinder:
- **Burkart, Wolfgang**
  **79100 Freiburg (DE)**
- **Scalone, Michelangelo**
  **4127 Birsfelden (CH)**
- **Schmid, Rudolf**
  **4057 Basel (CH)**

(54) **Neue Amidophosphin-Phosphinit-Verbindungen**

(57) Neue chirale, in (R)- und (S)-Form vorliegende Amidophosphin-Phosphinit-Verbindungen der allgemeinen Formel

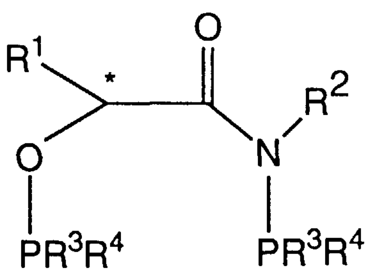

I

worin $R^1$ Alkyl, Cycloalkyl oder Aralkyl, $R^2$ Alkyl, Cycloalkyl, Aralkyl oder Aryl und $R^3$ und $R^4$ unabhängig voneinander Alkyl, Cycloalkyl, Aralkyl, Aryl oder Heteroaryl, oder $R^3$ und $R^4$ zusammen mit dem jeweiligen Phosphoratom eine 9-Dibenzophospholyl-, 9-Phosphabicyclo[3.3.1]nonyl- oder 9-Phosphabicyclo[4.2.1]nonylgruppe bedeuten und * ein chirales Zentrum bezeichnet, werden durch Umsetzung einer Verbindung der allgemeinen Formel $R^1C(OH)\text{-}CONHR^2$ (III) mit einem disubstituierten Chlorphosphan der allgemeinen Formel $R^3R^4PCl$ (IV) in einem Lösungsmittel und in Anwesenheit einer Base hergestellt. Als Liganden bilden die erfindungsgemässen Amidophosphin-Phosphinit-Verbindungen Komplexe mit Uebergangsmetallen der Gruppe VIII, insbesondere mit Rhodium, Iridium, Ruthenium und Palladium, und gegebenenfalls mit weiteren Liganden, und solche Komplexe sind ebenfalls Gegenstand der vorliegenden Erfindung; sie sind als Katalysatoren für enantioselektive Reaktionen, insbesondere für asymmetrische Hydrierungen, enantioselektive Wasserstoffverschiebungen und allylische Substitutionsreaktionen, verwendbar.

EP 0 864 576 A1

## Beschreibung

Die vorliegende Erfindung betrifft neue chirale, in (R)- oder (S)-Form vorliegende Amidophosphin-Phosphinit-Verbindungen der allgemeinen Formel

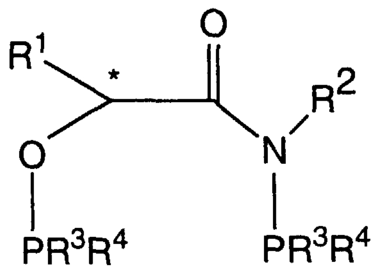

I

worin

$R^1$ $C_{2-8}$-Alkyl, $C_{3-8}$-Cycloalkyl oder Aryl-$C_{1-4}$-alkyl,
$R^2$ $C_{1-8}$-Alkyl, $C_{3-8}$-Cycloalkyl, Aryl-$C_{1-4}$-alkyl oder Aryl, und
$R^3$ und $R^4$ unabhängig voneinander $C_{1-8}$-Alkyl, $C_{3-8}$-Cycloalkyl, Aryl-$C_{1-4}$-alkyl, Aryl oder Heteroaryl, oder $R^3$ und $R^4$ zusammen mit dem jeweiligen Phosphoratom eine 9-Dibenzophospholyl-, 9-Phosphabicyclo[3.3.1]nonyl- oder 9-Phosphabicyclo[4.2.1]nonylgruppe bedeuten und
* ein chirales Zentrum bezeichnet.

Die Erfindung betrifft ferner die Herstellung der Amidophosphin-Phosphinit-Verbindungen der Formel I, Komplexe dieser Verbindungen als Liganden mit Metallen der Gruppe VIII und gegebenenfalls mit weiteren Liganden sowie die Verwendung der Komplexe als Katalysatoren für enantioselektive Reaktionen, wie z.B. asymmetrische Hydrierungen, enantioselektive Wasserstoffverschiebungen, allylische Substitutionsreaktionen und dergleichen.

Aufgabe der vorliegenden Erfindung ist es, neue, chirale Amidophosphin-Phosphinit-Verbindungen zur Verfügung zustellen, die in Form der oben erwähnten Komplexe in enantioselektiven Reaktionen Anwendung finden können und dabei höhere optische Ausbeuten ermöglichen.

Die Aufgabe wird durch die erfindungsgemässen chiralen Amidophosphin-Phosphinit-Verbindungen der Formel I gelöst.

Im Rahmen der vorliegenden Erfindung bedeutet der Ausdruck "$C_{1-4}$-Alkyl", "$C_{1-8}$-Alkyl" bzw. "$C_{2-8}$-Alkyl" eine geradkettige oder verzweigte Alkylgruppe mit bis zu 4 bzw. 8 Kohlenstoffatomen, wie beispielsweise Methyl, Ethyl, Propyl, Isopropyl, Butyl, Isobutyl, tert. Butyl, Pentyl, Isopentyl, Neopentyl, Hexyl, tert. Hexyl, Heptyl, Isoheptyl, Octyl oder Isooctyl.

Der Ausdruck "$C_{3-8}$-Cycloalkyl" umfasst Cyclopropyl, Cyclobutyl, Cyclopentyl, Cyclohexyl, Cycloheptyl und Cyclooctyl.

Der Ausdruck "Aryl", allein oder als Teil von "Aryl-$C_{1-4}$-alkyl", bedeutet eine Phenyl- oder Naphthylgruppe, welche jeweils entweder unsubstituiert oder einfach oder mehrfach substituiert sein kann. Als Substituenten kommen hier in Frage Halogen, $C_{1-8}$-Alkyl- und $C_{1-8}$-Alkoxygruppen, halogenierte $C_{1-8}$-Alkyl- und $C_{1-8}$-Alkoxygruppen, Di($C_{1-8}$-alkyl)amino, Tri($C_{1-4}$-alkyl)silyl (vorzugsweise Trimethylsilyl) und Phenyl, wobei mehrere vorhandene Substituenten gleich oder verschieden sein können. Im Falle von "Aryl-$C_{1-4}$-alkyl" bedeutet dies vorzugsweise unsubstituiertes Benzyl.

Der Ausdruck "Heteroaryl" bedeutet eine fünf- oder sechsgliedrige heterocyclische Gruppe mit aromatischem Charakter, die im Ring eins oder mehrere Heteroatome aus der Gruppe von Stickstoff, Sauerstoff und Schwefel aufweist. Beispiele der fünfgliedrigen heterocyclischen Gruppen sind Pyrrol, Thienyl und Furyl, und der sechsgliedrigen heterocyclischen Gruppen Pyridyl. Zudem können die heterocyclischen Gruppen wie das oben aufgeführte Aryl substituiert sein und/oder einen ankondensierten Benzolring aufweisen. Vorzugsweise weist Heteroaryl keine Substituenten auf.

Der Ausdruck Halogen bedeutet Fluor, Chlor, Brom oder Jod.

Der Ausdruck "$C_{1-8}$-Alkoxy" bedeutet eine geradkettige oder verzweigte Alkoxygruppe mit bis zu 8 Kohlenstoffatomen, vorzugsweise mit bis zu 4 Kohlenstoffatomen. Beispiele sind Methoxy, Ethoxy, Propoxy, Isopropoxy und Butoxy.

Der Ausdruck "halogenierte $C_{1-8}$-Alkylgruppe" oder "halogenierte $C_{1-8}$-Alkoxygruppe" bedeutet eine Alkyl- bzw. Alkoxygruppe, welche jeweils mit einem oder mehreren Halogenatomen, insbesondere Chlor oder Fluor, substituiert ist. Beispiele sind Trifluormethyl, Trichlormethyl und Pentafluormethyl bzw. Fluormethoxy und Chlormethoxy.

Vorzugsweise haben $R^3$ und $R^4$ die gleiche Bedeutung.

Bevorzugt sind Amidophosphin-Phosphinit-Verbindungen der Formel I, worin unabhängig voneinander $R^1$ tert. Butyl, $R^2$ Methyl und $R^3$ und $R^4$ jeweils Cyclohexyl, Phenyl, 3,5-Xylyl, 3,5-Di(trifluormethyl)phenyl, 3,5-Di(tert. butyl)phenyl, 3,5-Di(tert. butyl)-4-methoxyphenyl oder 2-Furyl, oder $R^3$ und $R^4$ zusammen mit dem Phosphoratom 9-Dibenzophospholyl bedeuten.

Besonders bevorzugt sind die Amidophosphin-Phosphinit-Verbindungen der Formel I, worin $R^3$ und $R^4$ 3,5-Di(tert. butyl)phenyl bedeuten.

Ganz besonders bevorzugte Amidophosphin-Phosphonit-Verbindungen der Formel I sind:

(S)- oder (R)-N-(Diphenylphosphanyl)-2-[(diphenylphosphanyl)oxy]-3,3,N-trimethyl-butyramid,

(S)- oder (R)-N-(Dicyclohexylphosphanyl)-2-[(dicyclohexylphosphanyl)oxy]-3,3,N-trimethyl-butyramid,

(S)- oder (R)-N-(Di-(2-furyl)-phosphanyl)-2[(di-(2-furyl)-phosphanyl)oxy]-3,3,N-trimethyl-butyramid,

(S)- oder (R)-N-(5H-Dibenzophospholyl)-2-[(5H-dibenzophospholyl)oxy]-3,3,N-trimethyl-butyramid,

(S)- oder (R)-N-[Bis(3,5-dimethylphenyl)-phosphanyl]-2-[(bis(3,5-dimethylphenyl)-phosphanyl)oxy]-3,3,N-trimethyl-butyramid,

(S)- oder (R)-N-[Bis(3,5-di(trifluormethyl)phenyl)-phosphanyl]-2-[(bis(3,5-di(trifluormethyl)phenyl)-phosphanyl)oxy]-3,3,N-trimethyl-butyramid,

(S)- oder (R)-N-[Bis(3,5-di(tert. butyl)phenyl)-phosphanyl]-2-[(bis(3,5-di(tert. butyl)phenyl)-phosphanyl)oxy]-3,3,N-trimethyl-butyramid und

(S)- oder (R)-N-[Bis-(3,5-di(tert. butyl)-4-methoxyphenyl)-phosphanyl]-2-[(bis(3,5-di(tert. butyl)-4-methoxyphenyl)-phosphanyl)oxy]-3,3,N-trimethyl-butyramid.

Die erfindungsgemässen Amidophosphin-Phosphinit-Verbindungen der Formel I (in der Rolle von Liganden) bilden Komplexe mit Uebergangsmetallen der Gruppe VIII, insbesondere mit Rhodium, Iridium, Ruthenium und Palladium, und solche Komplexe sind ebenfalls Gegenstand der vorliegenden Erfindung; sie sind als Katalysatoren für enantioselektive Reaktionen, insbesondere für asymmetrische Hydrierungen, enantioselektive Wasserstoffverschiebungen und allylische Substitutionsreaktionen, verwendbar.

Diese erfindungsgemässen Komplexe der Verbindungen der Formel I mit Uebergangsmetallen der Gruppe VIII können weitere Liganden enthalten. Beispiele solcher ebenfalls erfindungsgemässen Komplexe sind insbesondere optisch aktive kationische und neutrale Rhodium-, Iridium-, Ruthenium- und Palladium-Komplexe der allgemeinen Formeln

$$[Rh(Y)(L)_n]^+A^- \quad \text{II-a}$$

$$[Rh(Y)(L)_nB] \quad \text{II-b}$$

$$[Ir(Y)(L)_n]^+A^- \quad \text{II-c}$$

$$[Ir(Y)(L)_nB] \quad \text{II-d}$$

$$[Ir(Y)(B)_4]^-_rM^{r+} \quad \text{II-e}$$

$$[IrH(Y)(B)_2] \quad \text{II-f}$$

$$[Ir(Y)(B)_3]_2 \quad \text{II-g}$$

$$[Ir(B)_3(Y)] \quad \text{II-h}$$

$$[Ru(Y)]^{2+}(A^-)_2 \quad \text{II-i}$$

$$[Ru(Y)(B)_2] \quad \text{II-j}$$

$$[Ru(Y)(C^1)(C^2)_{2-m}](C^3)_m \qquad \text{II-k}$$

$$[Pd(Y)(B)_2] \qquad \text{II-l}$$

$$[Pd(Y)_2] \qquad \text{II-m}$$

$$[Pd(Y)(L)_n]^{2+}(A^-)_2 \qquad \text{II-n}$$

worin

- L einen neutralen Liganden,
- $A^-$ ein Anion einer Sauerstoffsäure oder Komplexsäure,
- B einen anionisch koordinierenden Liganden,
- $C^1$ Benzol, p-Cymol, Xylol oder Hexamethylbenzol,
- $C^2$ Halogen,
- $C^3$ Halogen oder $A^-$,
- n 0, 1 oder 2,
- m 0, 1 oder 2,
- r 1 oder 2,
- $M^{r+}$ ein Alkalimetall- oder Erdalkalimetallion oder ein tetrasubstituiertes Ammoniumion (r ist 1, 2 bzw. 1) aus der Gruppe von $(C_{1-8}$-Alkyl$)_4N^+$, (Phenyl)$N^+(C_{1-8}$-Alkyl$)_3$ und (Benzyl)$N^+(C_{1-8}$-Alkyl$)_3$, und
- Y eine chirale Amidophosphin-Phosphinit-Verbindung der Formel I bedeuten.

Der Ausdruck "neutraler Ligand" (L) bedeutet einen austauschbaren Liganden, insbesondere ein Olefin, z.B. Ethylen, Propylen, Cycloocten, 1,5-Hexadien, Norbornadien oder 1,5-Cyclooctadien; ein Aromat, z.B. Benzol, Hexamethylbenzol oder p-Cymol; ein Nitril, z.B. Acetonitril oder Benzonitril; oder ein Molekül des Lösungsmittels, in dem der Komplex hergestellt wird. Dieser Ligand kann bei der Hydrierung ausgetauscht werden. Falls mehr als ein solcher Ligand vorhanden ist (n = 2), können die Liganden gleich oder verschieden sein.

Der Ausdruck "Sauerstoffsäure oder Komplexsäure" (Quelles des Anions $A^-$) bedeutet eine Säure aus der Gruppe von $H_2SO_4$, $HClO_4$, $HBrO_4$, $HIO_4$, $HNO_3$, $H_3PO_4$, $H_3PO_3$ und $CF_3SO_3H$ bzw. ein Halogenkomplex mit dem Element Bor, Phosphor, Arsen, Antimon oder Bismut. Bevorzugte Vertreter beider Typen von Säuren sind $HClO_4$, $CF_3SO_3H$, $HPF_6$, $HBF_4$, $HB(Phenyl)_4$, $HB[3,5(CF_3)_2-C_6H_3]_4$, $HSbF_6$ und $HAsF_6$. Das Anion $A^-$ ergibt sich jeweils, indem ein Wasserstoffion entfernt wird; Beispiele sind $ClO_4^-$, $PF_6^-$ und $BF_4^-$.

Der Ausdruck "anionisch koordinierender Ligand" (B) umfasst insbesondere Halogen, einen Carbonsäurerest, einen Sulfonatrest, z.B. Tosylat oder Methansulfonat, ein 1,3-Diketonat, z.B. Acetylacetonat, ein gegebenenfalls substituiertes Phenolat, Hydroxy, Nitrat, Nitrit, Cyanat, Rhodanid, Cyanid, Allyl und 2-Methylallyl. Falls Phenolat substituiert ist, kommen als Substituenten insbesondere $C_{1-4}$-Alkylgruppen und Halogenatome in Frage, wobei die Substitution einfach oder mehrfach ist.

Als Alkalimetallion ($M^+$) oder Erdalkalimetallion ($M^{2+}$) eignet sich insbesondere das Natrium- oder Kaliumion bzw. das Calcium- oder Magnesiumion.

Der Ausdruck "tetrasubstituiertes Ammoniumion" ($M^+$) bedeutet ein Anion bestehend aus einem Stickstoffatom und vier identischen oder unterschiedlichen Substituenten, die aus der Gruppe von $C_{1-8}$-Alkyl, Phenyl und Benzyl ausgewählt sind, wie beispielsweise die Anionen $(C_{1-8}$-Alkyl$)_4N^+$, (Phenyl)$N^+(C_{1-8}$-Alkyl$)_3$ und (Benzyl)$N^+(C_{1-8}$-Alkyl$)_3$.

Der Ausdruck "Halogen" (B, $C^2$ oder $C^3$) umfasst Fluor, Chlor, Brom und Jod. Im Falle eines Komplexes der Formel II-e, in der B Halogen bedeutet, kann das Halogen von dem entsprechenden Alkalimetall-, Erdalkalimetall- oder tetrasubstituierten Ammonium-Halogenid stammen.

Bevorzugte erfindungsgemässe Komplexe der Verbindungen der Formel I sind die optisch aktiven kationischen und neutralen Rhodium-, Iridium- und Ruthenium-Komplexe der Formeln II-a - II-k.

Das erfindungsgemässe Verfahren zur Herstellung der neuen chiralen Verbindungen der Formel I ist dadurch gekennzeichnet, dass man eine Verbindung der allgemeinen Formel

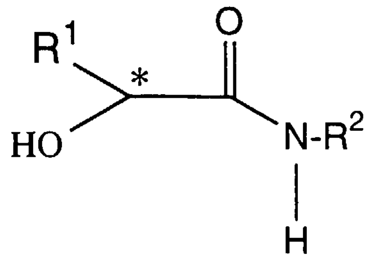

III

worin $R^1$ und $R^2$ die oben angegebenen Bedeutungen besitzen, mit einem disubstituierten Chlorphosphan der allgemeinen Formel

$$R^3R^4PCl \qquad IV$$

worin $R^3$ und $R^4$ die oben angegebenen Bedeutungen besitzen, in einem Lösungsmittel und in Anwesenheit einer Base umsetzt.

Geeigneterweise wird dabei die Verbindung der Formel III im Lösungsmittel gelöst, vorzugsweise unter einer Inertatmosphäre, z.B. Stickstoff oder Argon, und eine (die erste) Base zugefügt, was in der Regel bei Raumtemperatur erfolgen kann. Dann wird die Lösung stark abgekühlt, geeigneterweise bis auf etwa -80°C, und anschliessend gibt man die zweite Base und danach das Chlorphosphan, geeigneterweise im Lösungsmittel gelöst, langsam zu. Noch bei der tiefen Temperatur wird die Reaktion in Gang gebracht. Anschliessend kann die Temperatur allmählich erhöht werden, und zwar zweckmässigerweise auf Raumtemperatur, und danach das so erhaltene Produkt (die Verbindung der Formel I) nach an sich bekannten Methoden isoliert und gereinigt werden.

Als Basen im erfindungsgemässen Verfahren dienen in Rolle der "ersten Base" sekundäre oder tertiäre Amine, insbesondere Dialkylamine bzw. Trialkylamine, z.B. Dimethylamin, Diethylamin, Dipropylamin, Diisopropylamin, Trimethylamin, Triethylamin und Tripropylamin, und in Rolle der "zweiten Base" Alkalimetallalkyle oder Alkalimetallaryle, z.B. Propyllithium, Butyllithium, Phenyllithium, Butylnatrium und Butylkalium, d.h. eine Kombination eines sekundären oder tertiären Amins (erste Base) mit einem Alkalimetallalkyl oder Alkalimetallaryl (zweite Base). Besonders bevorzugte Basen sind Diisopropylamin und Butyllithium.

Als Lösungsmittel eignen sich aliphatische Kohlenwasserstoffe, vorzugsweise halogenierte aliphatische Kohlenwasserstoffe, wie beispielsweise Methylenchlorid und Chloroform; und aliphatische und cyclische Ether, wie beispielsweise Diethylether, tert.-Butylmethylether und 1,2-Dimethoxyethan bzw. Dioxan, Furan und Tetrahydrofuran; oder Gemische solcher Lösungsmittel. Bevorzugt wird für die Herstellung der Amidophosphin-Phosphinit-Verbindungen Diethylether oder Tetrahydrofuran als Lösungsmittel verwendet.

Zur Isolierung und Reinigung des Produktes wird zweckmässigerweise das Gemisch eingedampft, der Rückstand in ein geeignetes Lösungsmittel, insbesondere in einen niederen aliphatischen Ether, z.B. Diethylether, aufgenommen und nach Abfiltration von verbleibenden festen Anteilen das Filtrat zur Trockene eingedampft. Die so erhaltene chirale Verbindung der Formel I kann durch Kristallisation, insbesondere aus einem niederen aliphatischen Kohlenwasserstoff, z.B. Pentan, noch gereinigt werden.

Die enantiomerenreinen (R)- oder (S)-Verbindungen der Formel III ihrerseits können durch die asymmetrische Hydrierung des entsprechenden $\alpha$-Ketoamids $R^1COCONHR^2$ unter Verwendung von enantiomerenreinen Hydrierkatalysatoren in an sich bekannter Weise hergestellt werden [H.Takaya et. al., "Asymmetric Hydrogenation", Seiten 1-39 in Catalytic Asymmetric Synthesis, Ed. Iwao Ojima, VCH Publishers, Inc., New York/Weinheim/Cambridge (1993) sowie die am Ende des Artikels zitierten Referenzen].

Ueberraschenderweise wurde gefunden, dass die Komplexe der Formeln II-a bis II-n sowohl als solche, d.h. in Form des jeweiligen einheitlichen Komplexes, bestehend aus dem erfindungsgemässen Liganden Y (der chiralen Amidophosphin-Phosphinit-Verbindung der Formel I), dem Metall der Gruppe VIII und gegebenenfalls weiteren Liganden, als auch in Form der einzelnen Komponenten, als Katalysatoren für enantioselektive Reaktionen, z.B. asymmetrische Hydrierungen, agieren. Die Komplexe der Formeln II-a bis II-n selber können aus diesen Komponenten in an sich bekannter Weise hergestellt werden: siehe beispielsweise J.A.C.S. 93, 3089-3091 (1971); J. Chem. Soc., Chem. Comm. 1990, 869-871; Tetr.: Asymm. 7(11), 3059-3062 (1996); ibid. 6(1), 11-14 (1995); F.R. Hartley, The Chemistry of Platinum and Palladium, Applied Science Publishers Ltd., London 1973; J. Chem. Soc., Chem. Comm. 1986, 1338-1339; Inorg. Chem. 30, 125-130 (1991); Organometallics 12, 1406-1415 (1993); sowie ibid 15, 2440-2449 (1996).

Die erfindungsgemässen Komplexe der Verbindungen der Formel I mit Metallen der Gruppe VIII, insbesondere solche der oben erwähnten Formeln II-a bis II-k, eignen sich beispielsweise zur Katalyse der asymmetrischen Hydrierung

von Verbindungen der Formel V zu Verbindungen der Formel VI

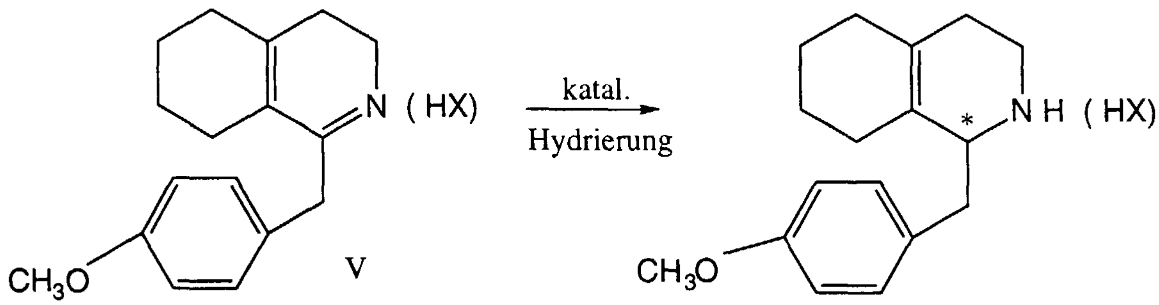


V

VI

worin HX eine Mineralsäure aus der Gruppe von $HBF_4$, $H_2SO_4$, $HPF_6$, HCl, HBr, HI, $H_3PO_4$, $HSbF_6$, $HClO_4$ und $NaH_2PO_4$ oder eine starke organische Säure aus der Gruppe von $C_{1-8}$-Alkyl$SO_3$H, Pikrinsäure, Ameisensäure, Niederalkyl- und Arylcarbonsäuren, z.B. Essigsäure, Propionsäure und Benzoesäure, und Dicarbonsäuren, z.B. Oxalsäure, Bernsteinsäure, Maleinsäure und Phthalsäure, bedeutet und * ein chirales Zentrum bezeichnet.

Das molare Verhältnis (Substrat:Katalysator, geläufig als "S/C" bezeichnet) zwischen der zu hydrierenden Verbindung der Formel V und dem Metallkomplex, der als Katalysator gemäss einer der Formeln II-a bis II-k verwendet wird, liegt zweckmässigerweise zwischen etwa 20 und etwa 80 000, vorzugsweise zwischen etwa 500 und etwa 30 000. Die Hydrierung wird zweckmässig bei Temperaturen im Bereich von etwa 0°C bis etwa 150°C, vorzugsweise 10°C bis 100°C, und einem Druck von etwa 1 bis etwa 200 bar (etwa 0,1MPa bis etwa 20MPa) vorzugsweise 10 bis 80 bar (1MPa bis 8MPa), durchgeführt.

Die freie Base der Verbindungen der Formel VI ist ein bekanntes und wertvolles Zwischenprodukt für pharmazeutisch verwendbare Endprodukte, z.B. den antitussiven Wirkstoff Dextromethorphan und den analgetischen Wirkstoff Levorphanol.

Die erfindungsgemässen Komplexe eignen sich auch beispielsweise als Katalysatoren für die asymmetrische Hydrierung von Verbindungen der Formel VII zu Verbindungen der Formel VIII

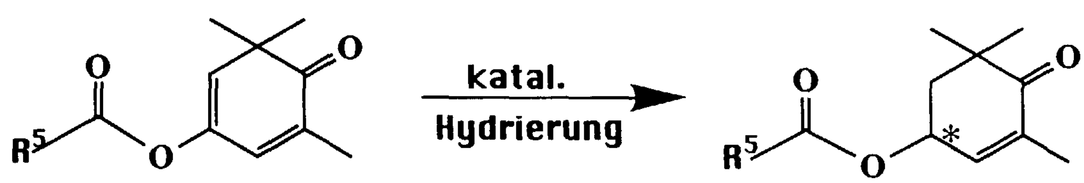


VII

VIII

worin $R^5$ $C_{1-8}$-Alkyl, $C_{1-8}$-Alkoxy, Phenyl, Benzyl oder eine Gruppe $N(R^6)_2$ und $R^6$ Wasserstoff, $C_{1-8}$-Alkyl, Phenyl oder Benzyl bedeuten und * ein chirales Zentrum bezeichnet.

Als Katalysatoren für diese asymmetrische Hydrierung werden vorzugsweise kationische Rhodiumkomplexe der Formel II-a verwendet.

Das Verhältnis zwischen Rhodium und dem erfindungsgemässen Liganden (chirale Amidophosphin-Phosphinit-Verbindung der Formel I) liegt im Bereich von etwa 0,05 bis etwa 5 Mol, vorzugsweise von 0,5 bis 2 Mol Rhodium per Mol Ligand. Das molare Verhältnis zwischen der zu hydrierenden Verbindung der Formel VII und Rhodium im Komplex der Formel II-a, d.h. das Substrat:Katalysator-Verhältnis (S/C), beträgt zweckmässigerweise etwa 20 bis etwa 100 000, insbesondere etwa 500 bis etwa 50 000. Die enantioselektive Hydrierung von Verbindungen der Formel VII unter Verwendung eines Komplexes der Formel II-a kann bei Temperaturen von etwa 10°C bis etwa 120°C, vorzugsweise bei etwa 10°C bis etwa 60°C, erfolgen. Die Hydrierung erfolgt zweckmässigerweise unter einem Druck von etwa 1 bis etwa 150 bar (etwa 0,1 bis etwa 15 MPa), vorzugsweise von 5 bis 60 bar (0,5 bis 6 MPa).

Die Verbindungen der Formel VIII sind wertvolle Zwischenprodukte zur Synthese von Retinoiden, die z.B. zur Therapie und Prophylaxe von dermatologischen Erkrankungen, z.B. Akne und Psoriasis [siehe beispielsweise Pure & Appl. Chem. 57, 741 (1985) sowie Europäische Patentpublikation 0 802 181 A1] verwendet werden können. Ferner sind die Verbindungen der Formel VIII, welche durch Hydrolyse in Phorenol und in einem weiteren Reaktionsschritt in optisch

aktives Actinol übergeführt werden können, wichtige Zwischenprodukte für die Herstellung von 3-Hydroxy-Carotinoiden, insbesondere für die Zeaxanthin-Herstellung [siehe Pure & Appl. Chem. 51, 535-564 (1979) und Helv. Chim. Acta 63, 1451-1455 (1980)].

Die nachfolgenden Beispiele dienen zur Veranschaulichung der Erfindung und sollen in keiner Weise eine Beschränkung darstellen. In den Beispielen haben die verwendeten Abkürzungen folgende Bedeutung:

| | |
|---|---|
| GC | Gaschromatographie |
| HPLC | Hochdruck-Flüssigkeitschromatographie |
| ee | Enantiomerer Ueberschuss (enantiomeric excess) |
| RT | Raumtemperatur |
| Smp. | Schmelzpunkt |
| HV | Hochvakuum |
| Ac | Acetyl |
| OV/p-DiMe-β-CD | 2,6-Dimethoxy-3-pentoxy-β-cyclodextrin gelöst in der achiralen Phase OV (Produkt von Ohio Valley Chemicals, Marietta, OH, USA) |
| COD | 1,5-Cyclooctadien |
| BIPHEMP | (6,6'-Dimethylbiphenyl-2,2'-diyl)bis(diphenylphosphin) |

Beispiel 1

Herstellung von (R)-2-Hydroxy-3,3,N-trimethyl-butyramid (Verbindung der Formel III)

In einer Glove Box ($O_2$-Gehalt < 1ppm) wurde eine Katalysatorlösung durch Lösen von 385 mg (0,5 mmol) [Ru(OAc)$_2$((R)-BIPHEMP)] in 40 ml einer 0,025 molaren methanolischen Salzsäurelösung und 40 ml Methylenchlorid hergestellt, anschliessend 1,5 Stunden bei 20°C gerührt und danach in einem druckfesten Katalysatorzugabegefäss transferiert. Ein 2L-Stahlautoklav wurde mit 71,6 g 2-Keto-3,3,N-trimethyl-butyramid (0,5 mol) und 310 ml Methanol beladen und verschlossen. Nach Austausch der Atmosphäre mit Wasserstoff wurde die Katalysatorlösung mit leichtem Ueberdruck aus dem Katalysatorzugabegefäss in den Autoklaven einfliessen gelassen und die Hydrierung unter Rühren bei 60°C und einem Druck von 60 bar (6 MPa) durchgeführt. Nach 20 Stunden wurde die Hydrierung abgebrochen und das Reaktionsgemisch eingedampft. Aus einer Lösung des Rückstands in 250 ml Diisopropylether fielen zuerst bei Raumtemperatur 1,2 g kristallines Produkt mit ee = 3% und einem Schmelzpunkt von 135-137°C aus. Durch Zugabe von 275 ml Cyclohexan und Rühren des Gemisches im Eisbad während 3 Stunden wurden 43,9 g (60,5%) (R)-2-Hydroxy-3,3,N-trimethyl-butyramid isoliert; Smp. 69 - 71°C; $[\alpha:]_D^{20}$ = -61,0° (c = 1, CHCl3), ee = 98,7% (gemessen durch GC an OV-61/p-DiMe-β-CD chiraler Säule).

Beispiel 2

Herstellung von (S)-2-Hydroxy-3,3,N-trimethyl-butyramid (Verbindung der Formel III)

Der Versuch wurde in zu Beispiel 1 analoger Weise durchgeführt. Die asymmetrische Hydrierung von 55,0 g 2-Keto-3,3,N-trimethyl-butyramid (0,384 mol) in 270 ml Methanol und 30 ml Methylenchlorid in Gegenwart eines aus 296 mg [Ru(OAc)$_2$((S)-BIPHEMP)] (0,384 mmol) und 31 ml einer 0,025 molaren methanolischen Salzsäurelösung hergestellten Katalysators ergab nach Kristallisation 34,4 g (62%) (S)-2-Hydroxy-3,3,N-trimethyl-butyramid, Smp. 60-62°C, $[\alpha]_D^{20}$ = + 59,9° (c=1, $CHCl_3$), ee = 99,2 %.

Beispiel 3

Herstellung von (R)-N-(Diphenylphosphanyl)-2-[(diphenylphosphanyl)oxy]-3,3,N-trimethyl-butyramid

In einem 500 ml Kolben mit seitlichem Schliffhahn zur Argonbegasung, Rührkern und Serumstopfen wurden bei RT 3,88 g (R)-2-Hydroxy-3,3,N-trimethyl-butyramid (26,7 mmol) in 200 ml getrocknetem Tetrahydrofuran gelöst und mit einer Spritze 0,5 ml Diisopropylamin zugegeben. Nach 30 Minuten Rühren wurde die farblose Lösung auf etwa -78°C abgekühlt und mit einer Spritze 28,5 ml Butyllithium (53,5 mmol) während 10 Minuten zugetropft. Nach 1-stündigem Rühren bei -78°C wurde der hellgelben Suspension eine Lösung von 11,8 g Chlordiphenylphosphan (53,5 mmol) in 30 ml Tetrahydrofuran während 30 Minuten zugetropft, wobei sich nach weiteren 60 Minuten bei -78°C allmählich eine hellgelbe klare Lösung bildete. Anschliessend wurde das Kältebad entfernt, das Lösungsmittel bei RT abgedampft und das verbleibende aufschäumende gelbe Oel 5 Stunden am HV getrocknet. Bei der Zugabe von 200 ml Diethylether bildete sich eine farblose Suspension mit einem Niederschlag von Lithiumchlorid. Die überstehende gelbe Lösung wurde in

einer Schutzgasnutsche über Alox (I, basisch; Aluminiumoxid zur Chromatographie, Aktivitätsstufe I, CAMAG, CH-4123 Muttenz, Schweiz) mit Diethylether, filtriert. Die vereinigten Filtrate wurden in einem Schlenkrohr am HV vollständig eingedampft und der Rückstand am HV 12 Stunden getrocknet. Das verbleibende gelbe Oel wurde mit flüssigem Stickstoffbei etwa -180°C erstarrt und schnell mit 50 ml Pentan versetzt. Nach 5 Minuten Behandlung im Ultraschall bildeten sich farblose Kristalle. Nach 24 Stunden Stehen bei etwa 5°C wurde die überstehende Lösung abgetrennt und das weisse Kristallisat bei 0°C zweimal mit je 20 ml, total 40 ml, Pentan gewaschen und 2 Stunden am HV getrocknet. Ausbeute: 8,41 g (61 %) (R)-N-(Diphenylphosphanyl)-2-[(diphenylphosphanyl)oxy]-3,3,N-trimethyl-butyramid [(R)-tLanNOP] als farblose Kristalle, Smp. 95 - 96°C; $[\alpha]_D^{20}$ = +37,5° (c = 1, $CHCl_3$); $^{31}$P-NMR (δ, ppm): 52,5 (P-N), 115,7 (P-O).

Beispiel 4

Herstellung von (S)-N-(Diphenylphosphanyl)-2-[(diphenylphosphanyl)oxy]-3,3,N-trimethyl-butyramid

Analog zur in Beispiel 3 beschriebenen Synthese wurde ein Gemisch bestehend aus 4,47 g (S)-2-Hydroxy-3,3,N-trimethyl-butyramid (30,7 mmol), 0,65 ml Diisopropylamin und 32,7 ml Butyllithium (61,6 mmol) in Tetrahydrofuran bei etwa -78°C mit 13,6 g Chlordiphenylphosphan (61,6 mmol) versetzt. Aufarbeitung, Reinigung und Kristallisation wie in Beispiel 3 beschrieben ergaben 10,6 g (20,6 mmol, 67 %) (S)-N-(Diphenylphosphanyl)-2-[(diphenylphosphanyl)oxy]-3,3,N-trimethyl-butyramid [(S)-tLANOP] als farblose Kristalle, Smp. 95 - 96°C; $[\alpha]_D^{20}$ = -37,7° (c = 1, $CHCl_3$); Reinheit: 99 % (NMR). $^{31}$P-NMR (δ, ppm): 52,5 (P-N), 115,7 (P-O).

Beispiel 5

Herstellung von (R)-N-(Di-(2-furyl)-phosphanyl)-2-[(di-(2-furyl)-phosphanyl)oxy]-3,3,N-trimethyl-butyramid

Analog zur in Beispiel 3 beschriebenen Synthese wurde ein Gemisch bestehend aus 1,78 g (R)-2-Hydroxy-3,3,N-trimethyl-butyramid (12,3 mmol), 0,1 ml Diisopropylamin und 13,0 ml Butyllithium (61,6 mmol) in Tetrahydrofuran bei etwa -78°C mit 4,93 g Chlor-di-(2-furyl)-phosphan (24,6 mmol) versetzt. Aufarbeitung, Reinigung und Kristallisation wie in Beispiel 3 beschrieben ergaben 2,77 g (48 %) (R)-N-(Di-(2-furyl)-phosphanyl)-2-[(di-(2-furyl)-phosphanyl)oxy]-3,3,N-trimethyl-butyramid [(R)-(2-Furyl)-tLANOP] als farbloses, hydrolyseempfindliches Pulver, Reinheit: ≥95 % (NMR). $^{31}$P-NMR (δ, ppm): 0.8 (P-N), 64,9 (P-O).

Beispiel 6

Herstellung von (R)-N-(Dicyclohexylphosphanyl)-2-[(dicyclohexylphosphanyl)oxy]-3,3,N-trimethyl-butyramid

Analog zur in Beispiel 3 beschriebenen Synthese wurde ein Gemisch bestehend aus 3,16 g (R)-2-Hydroxy-3,3,N-trimethyl-butyramid (22,3 mmol), 0,50 ml Diisopropylamin und 27,8 ml Butyllithium (44,5 mmol) in Tetrahydrofuran bei etwa -78°C mit 10,4 g Chlordicyclohexylphosphan (44,5 mmol) versetzt. Aufarbeitung, Reinigung und Kristallisation wie in Beispiel 3 beschrieben ergaben 8,20 g (69 %) (R)-N-(Dicyclohexylphosphanyl)-2-[(dicyclohexylphosphanyl)oxy]-3,3,N-trimethyl-butyramid [(R)-Cy-tLANOP] als farblosen Feststoff, Reinheit: 98 % (NMR). $^{31}$P-NMR (δ, ppm): 65,4 (P-N), 139,3 (P-O).

Beispiel 7

Herstellung von (S)-N-(Dicyclohexylphosphanyl)-2-[(dicyclohexylphosphanyl)oxy]-3,3,N-trimethyl-butyramid

Analog zur in Beispiel 3 beschriebenen Synthese wurde ein Gemisch bestehend aus 1,69 g (S)-2-Hydroxy-3,3,N-trimethyl-butyramid (11,9 mmol), 0,25 ml Diisopropylamin und 14,8 ml Butyllithium (23,7 mmol) in Tetrahydrofuran bei etwa -78°C mit 5,52 g Chlordicyclohexylphosphan (23,7 mmol) versetzt. Aufarbeitung, Reinigung und Kristallisation wie in Beispiel 3 beschrieben ergaben 4,20 g (66 %) (S)-N-(Dicyclohexylphosphanyl)-2-[(dicyclohexylphosphanyl)oxy]-3,3,N-trimethyl-butyramid [(S)-Cy-tLANOP] als farbloses, hydrolyseempfindliches Pulver nach Zerkleinern mit dem Spatel, Reinheit: 98 % (NMR). $^{31}$P-NMR (δ, ppm): 65,4 (P-N), 139,3 (P-O).

Beispiel 8

Herstellung von (R)-N-[Bis(3,5-dimethylphenyl)-phosphanyl]-2-[(bis(3,5-dimethylphenyl)-phosphanyl)oxy]-3,3,N-trimethyl-butyramid

Analog zur in Beispiel 3 beschriebenen Synthese wurde ein Gemisch bestehend aus 0,66 g (R)-2-Hydroxy-3,3,N-trimethyl-butyramid (4,56 mmol), 0,05 ml Diisopropylamin und 5,70 ml Butyllithium (30,3 mmol) in Tetrahydrofuran bei etwa -78°C mit 6,63 g Chlor-bis(3,5-dimethylphenyl)phosphan (30,3 mmol) versetzt. Aufarbeitung, Reinigung und Kristallisation wie in Beispiel 3 beschrieben ergaben 2,23 g (73 %) (R)-N-[Bis(3,5-dimethylphenyl)-phosphanyl]-2-[(bis(3,5-dimethylphenyl)-phosphanyl)oxy]-3,3,N-trimethyl-butyramid [(R)-3,5-Xyl-tLANOP] als farbloses hydrolyseempfindliches Pulver. Reinheit: etwa 90 - 95 % (NMR). $^{31}$P-NMR (δ, ppm): 53,3 (P-N), 117,7 (P-O).

Beispiel 9

Herstellung von (S)-N-[Bis(3,5-di(trifluormethyl)phenyl)-phosphanyl]-2-[(bis(3,5-di(trifluormethyl)phenyl)-phosphanyl)oxy]-3,3,N-trimethyl-butyramid

Analog zur in Beispiel 3 beschriebenen Synthese wurde ein Gemisch bestehend aus 0,76 g (S)-2-Hydroxy-3,3,N-trimethyl-butyramid (5,26 mmol), 0,05 ml Diisopropylamin und 6,56 ml Butyllithium (10,5 mmol) in Tetrahydrofuran bei etwa -78°C mit 6,63 g Chlor-bis(3,5-di(trifluormethyl)phenyl)phosphan (10,5 mmol) versetzt. Aufarbeitung, Reinigung und Kristallisation wie in Beispiel 3 beschrieben ergaben 3,55 g (64 %) (S)-N-[Bis(3,5-di(trifluormethyl)phenyl)-phosphanyl]-2-[(bis(3,5-di(trifluormethyl)phenyl)-phosphanyl)oxy]-3,3,N-trimethyl-butyramid [(S)-3,5-$CF_3$-tLANOP] als leicht braunes, hydrolyseempfindliches Oel. Reinheit: etwa 90% (NMR). $^{31}$P-NMR (δ, ppm): 50,8 (P-N), 112,9 (P-O).

Beispiel 10

Herstellung von (R)-N-[Bis(3,5-di(tert. butyl)phenyl)-phosphanyl]-2-[(bis(3,5-di(tert. butyl)phenyl)-phosphanyl)oxy]-3,3,N-trimethyl-butyramid

Analog zur in Beispiel 3 beschriebenen Synthese wurde ein Gemisch bestehend aus 0,68 g (R)-2-Hydroxy-3,3,N-trimethyl-butyramid (4,74 mmol), 0,05 ml Diisopropylamin und 5,93 ml Butyllithium (9,48 mmol) in Tetrahydrofuran bei etwa -78°C mit 4,22 g Chlor-bis(3,5-di(tert. butyl)phenyl)phosphan (9,48 mmol) versetzt. Aufarbeitung, Reinigung und Kristallisation wie in Beispiel 3 beschrieben ergaben 3,78 g (83 %) (R)-N-[Bis(3,5-di(tert. butyl)phenyl)-phosphanyl]-2-[(bis(3,5-di(tert. butyl)phenyl)-phosphanyl)oxy]-3,3,N-trimethyl-butyramid [(R)-3,5-tBu-tLANOP] als farbloses Pulver nach Zerkleinern mit dem Spatel. Reinheit: etwa 95 % (NMR). $^{31}$P-NMR (δ, ppm): 56,4 (P-N), 112,4 (P-O).

Beispiel 11

Herstellung von (S)-N-[Bis(3,5-di(tert. butyl)phenyl)-phosphanyl]-2-[(bis(3,5-di(tert. butyl)phenyl)-phosphanyl)oxy]-3,3,N-trimethyl-butyramid

Analog zur in Beispiel 3 beschriebenen Synthese wurde ein Gemisch bestehend aus 0,93 g (S)-2-Hydroxy-3,3,N-trimethyl-butyramid (6,4 mmol), 0,05 ml Diisopropylamin und 8,00 ml Butyllithium (12,8 mmol) in Tetrahydrofuran bei etwa -78°C mit 5,99 g Chlor-bis(3,5-di(tert. butyl)phenyl)phosphan (12,8 mmol) versetzt. Aufarbeitung, Reinigung und Kristallisation wie in Beispiel 3 beschrieben ergaben 3,41 g (3,54 mmol, 55 %) (S)-N-[Bis(3,5-di(tert. butyl)phenyl)-phosphanyl]-2-[(bis(3,5-di(tert. butyl)phenyl)-phosphanyl)oxy]-3,3,N-trimethyl-butyramid [(S)-3,5-tBu-tLANOP] als farbloses Pulver. Reinheit: etwa 97 % (NMR). $^{31}$P-NMR (δ, ppm): 56,4 (P-N), 112,4 (P-O).

Beispiel 12

Herstellung von (S)-N-[Bis-(3,5-di(tert. butyl)-4-methoxyphenyl)-phosphanyl]-2-[(bis-(3,5-di(tert. butyl)-4-methoxyphenyl)-phosphanyl)oxy]-3,3,N-trimethyl-butyramid

Analog zur in Beispiel 3 beschriebenen Synthese wurde ein Gemisch bestehend aus 0,59 g (S)-2-Hydroxy-3,3,N-trimethyl-butyramid (4,07 mmol), 0,05 ml Diisopropylamin und 5,08 ml Butyllithium (8,14 mmol) in Tetrahydrofuran bei etwa -78°C mit 4,11 g Chlor-bis(3,5-di(tert. butyl)-4-methoxyphenyl)phosphan (8,14 mmol) versetzt. Aufarbeitung, Reinigung und Kristallisation wie in Beispiel 3 beschrieben ergaben 2,63 g (60 %) (S)-N-[Bis-(3,5-di(tert. butyl)-4-methoxyphenyl)-phosphanyl]-2-[(bis-(3,5-di(tert. butyl)-4-methoxyphenyl)-phosphanyl)oxy]-3,3,N-trimethyl-butyramid [(S)-3,5-tBu,4-MeO-tLANOP] als farbloses oxidationsempfindliches Pulver. Reinheit: etwa 95 % (NMR). $^{31}$P-NMR (δ, ppm): 54,2 (P-N), 110,8 (P-O).

Beispiel 13

Herstellung von (S)-N-(5H-Dibenzophospholyl)-2-[(5H-dibenzophospholyl)oxy]-3,3,N-trimethyl-butyramid

Analog zur in Beispiel 3 beschriebenen Synthese wurde ein Gemisch bestehend aus 2,20 g (S)-2-Hydroxy-3,3,N-trimethyl-butyramid (15,2 mmol), 0,3 ml Diisopropylamin und 19,0 ml Butyllithium (30,3 mmol) in Tetrahydrofuran bei etwa -78°C mit 6,63 g 5-Chlor-5H-dibenzophosphol (30,3 mmol) versetzt. Aufarbeitung, Reinigung und Kristallisation wie in Beispiel 3 beschrieben ergaben 4,74 g (62 %) (S)-N-(5H-Dibenzophospholyl)-2-[(5H-dibenzophospholyl)oxy]-3,3,N-trimethyl-butyramid [(S)-Diphol-tLANOP] als farbloses Pulver. Reinheit: ≥90 % (NMR). $^{31}$P-NMR (δ, ppm): 40,4 (P-N), 112,2 (P-O).

Beispiel 14

Herstellung von [(R)-2-(1-Dimethylamino-ethyl)-phenyl-C,N]-[(S)-N-(diphenylphosphanyl)-2-[(diphenylphosphanyl)oxy]-3,3,N-trimethyl-butyramid]Pd(II)-tetrafluorborat

Dieser Komplex dient zur Charakterisierung der genannten Verbindung der Formel I.

In einer Glove Box wurden in ein 50 ml Schlenkrohr mit Rührkern und Serumstopfen 105 mg Bis-(acetonitril)-[(R)-2-(1-dimethylamino-ethyl)-phenyl]-Pd(II)-tetrafluorborat (0,250 mmol) und 129 mg (S)-N-(Diphenylphosphanyl)-2-[(diphenylphosphanyl)oxy]-3,3,N-trimethyl-butyramid (0,250 mmol) eingewogen und in 10 ml Dichlormethan gelöst. Nach zehnminütigem Rühren bei RT wurde die farblose klare Lösung im HV bei RT zur Trockene eingedampft. Der farblose Rückstand wurde mit 10 ml Diethylether gewaschen und 2 Stunden im HV getrocknet. Ausbeute: 211 mg (98 %) [(R)-2-(1-Dimethylamino-ethyl)-phenyl-C,N]-[(S)-N-(diphenylphosphanyl)-2-[(diphenylphosphanyl)oxy]-3,3,N-trimethyl-butyramid]Pd(II)-tetrafluorborat. Reinheit: etwa 98 % (NMR).

| Mikroanalyse: | | | |
|---|---|---|---|
| | C | H | N |
| Ber. | 57,60 | 5,54 | 3,28 |
| Gef. | 57,42 | 5,54 | 3,08 |

Beispiel 15

Herstellung von (Cycloocta-1,5-dien)-[(R)-N-(diphenylphosphanyl)-2-[(diphenylphosphanyl)oxy]-3,3,N-trimethyl-butyramid]Rh(I)-tetrafluorborat

In ein 100 ml Schlenkrohr wurde zu einer Suspension von 144 mg Bis-(cycloocta-1,5-dien)-Rh(I)-tetrafluorborat (0,355 mmol) in 10 ml Tetrahydrofuran eine Lösung von 189 mg (R)-N-(Diphenylphosphanyl)-2-[(diphenylphosphanyl)oxy]-3,3,N-trimethyl-butyramid, (0,368 mmol) in 10 ml Tetrahydrofuran bei RT während 2 Minuten unter Rühren zugetropft. Dabei entstand aus der orangebraunen Suspension unmittelbar eine klare gelborange Lösung, die nach 5 Minuten Rühren im HV bei RT eingedampft wurde. Nach 2 Stunden Trocknen am HV wurde der verbleibende orange, ölige Rückstand in 10 ml Diethylether suspendiert, die überstehende Lösung nach 12-stündigem Stehen bei RT abgetrennt und der gelbe feinkristalline Feststoff 12 Stunden im HV getrocknet. Ausbeute: 278 mg (97 %) (Cycloocta-1,5-dien)-[(R)-N-(diphenylphosphanyl)-2-[(diphenylphosphanyl)oxy]-3,3,N-trimethyl-butyramid]Rh(I)-tetrafluorborat. Reinheit: ≥99 % (NMR).

| Mikroanalyse: | | | | |
|---|---|---|---|---|
| | C | H | N | P |
| Ber. | 57,73 | 5,59 | 1,73 | 7,63 |
| Gef. | 57,51 | 5,59 | 1,46 | 7,41 |

Beispiel 16

Herstellung von (Cycloocta-1,5-dien)-[(S)-N-(diphenylphosphanyl)-2-[(diphenylphosphanyl)oxy]-3,3,N-trimethylbutyramid]Ir(I)-tetrafluorborat

Analog zur in Beispiel 15 beschriebenen Synthese wurde ein Gemisch bestehend aus 96 mg Bis-(cycloocta-1,5-dien)-Ir(I)-tetrafluorborat (0,195 mmol) und 100 mg (S)-N-(Diphenylphosphanyl)-2-[(diphenylphosphanyl)oxy]-3,3,N-trimethyl-butyramid (0,195 mmol) in 20 ml Tetrahydrofuran bei RT während 30 Minuten gerührt. Aufarbeitung und Kristallisation wie in Beispiel 15 beschrieben ergaben 139 mg (80%) (Cycloocta-1,5-dien)-[(S)-N-(diphenylphosphanyl)-2-[(diphenylphosphanyl)oxy]-3,3,N-trimethyl-butyramid]Ir(I)-tetrafluorborat als rote Kristalle. Reinheit: ≥99 % (NMR).

| Mikroanalyse: | | | | |
|---|---|---|---|---|
| | C | H | N | P |
| Ber. | 52,00 | 5,04 | 1,56 | 6,88 |
| Gef. | 51,93 | 4,95 | 1,51 | 6,43 |

Beispiel 17

Katalysierte Hydrierung von 1-(4-Methoxybenzyl)-3,4,5,6,7,8-hexahydroisochinolin-tetrafluorborat

In einer Glove Box ($O_2$-Gehalt < 1ppm) wurden in einem 35 ml-Autoklaven mit Glaseinsatz 13,4 mg $[IrCl(COD)]_2$ (0,020 mmol) und 57,7 mg (R)-3,5-tBu-tLANOP (0,060 mmol) als chiraler Ligand in 4 ml Toluol gelöst. Nach Zugabe von 59,1 mg Tetrabutylammoniumjodid ($Bu_4N^+J^-$) (0,16 mmol) und Rühren während 30 Minuten wurden dieser Katalysatorlösung 0,343g 1-(4-Methoxybenzyl)-3,4,5,6,7,8-hexahydroisochinolin-tetrafluorborat (1,0 mmol) und 4 ml Methanol zugegeben. Dann wurde der Autoklav verschlossen und die Hydrierung unter Rühren bei 25°C und einem Druck von 100 bar (10 MPa) Wasserstoffwährend 44 Stunden durchgeführt. Die gelbe Hydrierlösung wurde am Rotationsverdampfer bei 40°C/20 mbar (2 kPa) eingedampft. Bei einem vollständigen Umsatz bestand der Rückstand gemäss HPLC- [Säule: ChiralPAK AD (Daicel Chem. Ind. Ltd.; Katalog Nr. 7407-00), Eluens: 10% Ethanol und 0,2% Triethylamin in Hexan] und GC- [Als Amid der (-)-Camphansäure, Säule: OV-240 OH (Ohio Valley Chemicals, Marietta, OH, USA; Katalog Nr. 091785) 15m] Analyse aus 48% (S)-1-(4-Methoxybenzyl)-1,2,3,4,5,6,7,8-octahydroisochinolin mit einem ee von 72%.

Beispiele 17.1-17.7

In zu Beispiel 17 analoger Weise wurde die Hydrierung von 1-(4-Methoxybenzyl)-3,4,5,6,7,8-hexahydroisochinolin-HX-Salzen mit den in der Tabelle 1 aufgeführten chiralen Liganden durchgeführt. Die Versuche mit HX = $HBF_4$ und $HPF_6$ wurden in Toluol (4 ml) / Methanol (4 ml), jene mit HX = $H_2SO_4$ in Tetrahydrofuran (8 ml) / Wasser (0,2 ml) durchgeführt.

Tabelle 1

| Beisp. Nr. | HX | Chiraler Ligand | % Selektivität | % ee |
|---|---|---|---|---|
| 17.1[a] | $HBF_4$ | (R)-3,5-tBu-tLANOP | 55 | 67 (R) |
| 17.2[b] | $HBF_4$ | (R)-3,5-tBu-tLANOP | 80 | 65 (R) |
| 17.3 | $HBF_4$ | (S)-3,5-tBu,4-MeO-tLANOP | 55 | 78 (S) |
| 17.4 | $H_2SO_4$ | (S)-3,5-tBu-tLANOP | 46 | 86 (S) |
| 17.5[a] | $H_2SO_4$ | (R)-3,5-tBu-tLANOP | 36 | 73 (R) |
| 17.6[c] | $H_2SO_4$ | (R)-3,5-tBu-tLANOP | 66 | 70 (R) |
| 17.7 | $HPF_6$ | (S)-3,5-tBu,4-MeO-tLANOP | 52 | 78 (S) |

a) Zusatz von 0,026 mmol Bil3 anstelle von $Bu_4N^+I^-$;
b) Zusatz von 0,08 mmol Phthalimid anstelle von $Bu_4N^+I^-$;
c) Temperatur = 80°C, S/C 5000;

Beispiele 18.1 und 18.2

Katalysierte Hydrierung von 4-Acetoxy-2,6,6-trimethylcyclohexa-2,4-dien-1-on

In zu Beispiel 17 analoger Weise wurde die Hydrierung von 4-Acetoxy-2,6,6-trimethylcyclohexa-2,4-dien-1-on zu 4-Acetoxy-2,6,6-trimethylcyclohexa-2-en-1-on mit den in der Tabelle 2 aufgeführten chiralen Liganden durchgeführt.

Tabelle 2

| Beisp. Nr. | Substrat | Chiraler Ligand | Kat.[d] | % ee |
|---|---|---|---|---|
| 18.1 | 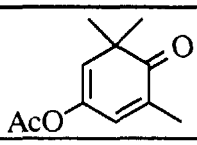 | (S)-tLANOP | $Rh(BF_4)$ | 71 (R) |
| 18.2 | | (S)-Cy-tLANOP | " | 71 (R) |

d) $Rh(BF_4)$: der aus $[Rh(COD)_2]BF_4$ und dem chiralen Liganden in situ hergestellte Komplex; Bedingungen: S/Rh 100, Ethylacetat, RT, 10 bar (1 MPa) Wasserstoff;

**Patentansprüche**

1. Chirale, in (R) - oder (S)-Form vorliegende Amidophosphin-Phosphinit-Verbindungen der allgemeinen Formel

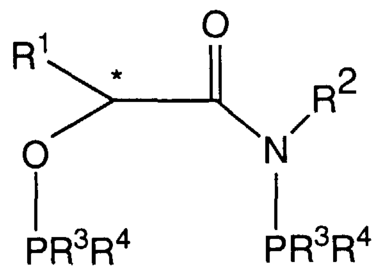

I

worin

| | |
|---|---|
| $R^1$ | $C_{2-8}$-Alkyl, $C_{3-8}$-Cycloalkyl oder Aryl-$C_{1-4}$-alkyl, |
| $R^2$ | $C_{1-8}$-Alkyl, $C_{3-8}$-Cycloalkyl, Aryl-$C_{1-4}$-alkyl oder Aryl, und |
| $R^3$ und $R^4$ | unabhängig voneinander $C_{1-8}$-Alkyl, $C_{3-8}$-Cycloalkyl, Aryl-$C_{1-4}$-alkyl, Aryl oder Heteroaryl, oder $R^3$ und $R^4$ zusammen mit dem jeweiligen Phosphoratom eine 9-Dibenzophospholyl-, 9-Phosphabicyclo[3.3.1]nonyl- oder 9-Phosphabicyclo[4.2.1]nonylgruppe bedeuten und |
| * | ein chirales Zentrum bezeichnet. |

2. Amidophosphin-Phosphinit-Verbindungen nach Anspruch 1, dadurch gekennzeichnet, dass $R^3$ und $R^4$ die gleiche Bedeutung haben.

3. Amidophosphin-Phosphinit-Verbindungen nach Anspruch 1 oder 2, dadurch gekennzeichnet, dass $R^1$ tert. Butyl bedeutet.

4. Amidophosphin-Phosphinit-Verbindungen nach einem der Ansprüche 1 bis 3, dadurch gekennzeichnet, dass $R^2$ Methyl bedeutet.

5. Amidophosphin-Phosphinit-Verbindungen nach einem der Ansprüche 1 bis 4, dadurch gekennzeichnet, dass $R^3$ und $R^4$ unabhängig voneinander Cyclohexyl, Phenyl, 3,5-Xylyl, 3,5-Di(trifluormethyl)phenyl, 3,5-Di(tert. butyl)phenyl, 3,5-Di(tert. butyl)-4-methoxyphenyl oder 2-Furyl, oder $R^3$ und $R^4$ zusammen mit dem Phosphoratom 9-Dibenzophospholyl bedeuten.

6. Eine Amidophosphin-Phosphinit-Verbindung nach Anspruch 1, ausgewählt aus

   (R)- oder (S)-N-(Diphenylphosphanyl)-2-[(diphenylphosphanyl)oxy]-3,3,N-trimethyl-butyramid,
   (R)- oder (S) N-(Di-(2-furyl)-phosphanyl)-2-[(di-(2-furyl)-phosphanyl)oxy]-3,3,N-trimethyl-butyramid,
   (R)- oder (S)-N-(Dicyclohexylphosphanyl)-2- [(dicyclohexylphosphanyl)oxy]-3,3,N-trimethyl-butyramid,
   (R)- oder (S)-N-[Bis(3,5-dimethylphenyl)-phosphanyl]-2-[(bis(3,5-dimethylphenyl)-phosphanyl)oxy]-3,3,N-trimethyl-butyramid,
   (R)- oder (S)-N-[Bis(3,5-di(tert. butyl)phenyl)-phosphanyl]-2-[(bis(3,5-di(tert. butyl)phenyl)-phosphanyl)oxy]-3,3,N-trimethyl-butyramid,
   (R)- oder (S)-N-[Bis-(3,5-di(tert. butyl)-4-methoxyphenyl)-phosphanyl]-2-[(bis-(3,5-di(tert. butyl)-4-methoxyphenyl)-phosphanyl)oxy]-3,3,N-trimethyl-butyramid,
   (R)- oder (S)-N-(5H-Dibenzophospholyl)-2-[(5H-dibenzophospholyl)oxy]-3,3,N-trimethyl-butyramid und
   (R)- oder (S)-N-[Bis(3,5-di(trifluormethyl)phenyl)-phosphanyl]-2-[(bis(3,5-di(trifluormethyl)phenyl)-phosphanyl)oxy]-3,3,N-trimethyl-butyramid.

7. Komplexe von Amidophosphin-Phosphinit-Verbindungen der Formel I gemäss Anspruch 1 mit einem Metall der Gruppe VIII.

8. Komplexe nach Anspruch 7, worin das Metall der Gruppe VIII Ruthenium, Rhodium, Iridium oder Palladium ist.

9. Komplexe nach Anspruch 7 oder 8, die als Liganden sowohl eine Amidophosphin-Phosphinit-Verbindung der Formel I als auch jeweils einen oder mehrere weitere Liganden enthalten, insbesondere optisch aktive kationische und neutrale Rhodium-, Iridium-, Ruthenium- und Palladium-Komplexe der allgemeinen Formeln

$$[Rh(Y)(L)_n]^+A^- \qquad \text{II-a}$$

$$[Rh(Y)(L)_nB] \qquad \text{II-b}$$

$$[Ir(Y)(L)_n]^+A^- \qquad \text{II-c}$$

$$[Ir(Y)(L)_nB] \qquad \text{II-d}$$

$$[Ir(Y)(B)_4]^-_rM^{r+} \qquad \text{II-e}$$

$$[IrH(Y)(B)_2] \qquad \text{II-f}$$

$$[Ir(Y)(B)_3]_2 \qquad \text{II-g}$$

$$[Ir(B)_3(Y)] \qquad \text{II-h}$$

$$[Ru(Y)]^{2+}(A^-)_2 \qquad \text{II-i}$$

$$[Ru(Y)(B)_2] \qquad \text{II-j}$$

$$[Ru(Y)(C^1)(C^2)_{2-m}](C^3)_m \qquad \text{II-k}$$

$$[Pd(Y)(B)_2] \qquad \text{II-l}$$

$$[Pd(Y)_2] \qquad \text{II-m}$$

$$[Pd(Y)(L)_n]^{2+}(A^-)_2 \qquad \text{II-n}$$

worin

| | |
|---|---|
| L | einen neutralen Liganden, |
| $A^-$ | ein Anion einer Sauerstoffsäure oder Komplexsäure, |
| B | einen anionisch koordinierenden Liganden, |
| $C^1$ | Benzol, p-Cymol, Xylol oder Hexamethylbenzol, |
| $C^2$ | Halogen, |
| $C^3$ | Halogen oder $A^-$, |
| n | 0, 1 oder 2, |
| m | 0, 1 oder 2, |
| r | 1 oder 2, |
| $M^{r+}$ | ein Alkalimetall- oder Erdalkalimetallion oder ein tetrasubstituiertes Ammoniumion (r ist 1, 2 bzw. 1) aus der Gruppe von $(C_{1-8}Alkyl)_4N^+$, $(Phenyl)N^+(C_{1-8}\text{-}Alkyl)_3$ und $(Benzyl)N^+(C_{1-8}\text{-}Alkyl)_3$, und |
| Y | eine chirale Amidophosphin-Phosphinit-Verbindung der Formel I bedeuten. |

**10.** Komplexe nach Anspruch 9 der Formeln II-a bis II-k.

**11.** Verfahren zur Herstellung einer chiralen, in (R)- oder (S)-Form vorliegenden Amidophosphin-Phosphinit-Verbindung der allgemeinen Formel

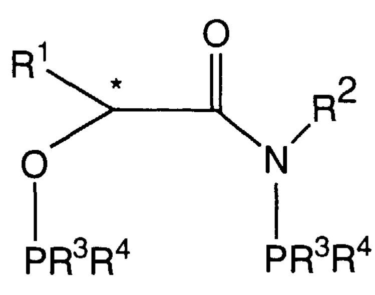

I

worin $R^1$, $R^2$, $R^3$, $R^4$ und * die in Anspruch 1 angegebenen Bedeutungen besitzen, dadurch gekennzeichnet, dass man eine Verbindung der allgemeinen Formel

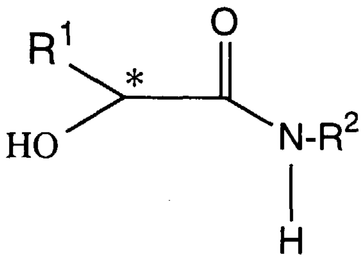

III

mit einem disubstituierten Chlorphosphan der allgemeinen Formel

$$R^3R^4PCl \qquad IV$$

in einem Lösungsmittel und in Anwesenheit einer Base umsetzt.

**12.** Verfahren nach Anspruch 11, dadurch gekennzeichnet, dass als Lösungsmittel ein halogenierter aliphatischer Kohlenwasserstoff, ein aliphatischer oder cyclischer Ether, oder ein Gemisch solcher Lösungsmittel und als Base eine Kombination eines sekundären oder tertiären Amins mit einem Alkalimetallalkyl oder -aryl verwendet wird.

**13.** Verwendung der Komplexe gemäss einem der Ansprüche 7 bis 10 als Katalysatoren für enantioselektive Reaktionen, insbesondere für asymmetrische Hydrierungen, enantioselektive Wasserstoffverschiebungen und allylische Substitutionsreaktionen.

Europäisches Patentamt

# EUROPÄISCHER RECHERCHENBERICHT

Nummer der Anmeldung
EP 98 10 3615

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
| X | ROUCOUX A ET AL: "Amidophosphine-Phosphinites: Synthesis and Use in Rhodium-Based Asymmetric Hydrogenation of Activated Keto Compounds. Crystal Structure of Bis'(.mu.-chloro)((S)-2-((diphenylphosphino)oxy)-2-phen yl-N-(diphenylphosphino)-N-methylacetamide)rhodium(I)!" ORGANOMETALLICS (ORGND7,02767333);96; VOL.15 (10); PP.2440-9, UNIVERSITE DES SCIENCES ET TECHNOLOGIES DE LILLE;LABORATOIRE DE CHIMIE ORGANIQUE APPLIQUEE; VILLENEUVE D'ASCQ; 59652; FR. (FR), XP002068993<br>* das ganze Dokument *<br>--- | 1-13 | C07F9/46<br>C07F15/00<br>B01J31/18<br>C07B53/00<br>C07F9/6568<br>C07F9/655<br>//C07M7:00 |
| X | ROUCOUX A ET AL: "Highly efficient asymmetric hydrogenation of activated and unactivated ketones catalyzed by Rhodium(I) aminophosphine-and amidophosphine-phosphinite complexes." SYNLETT., Nr. 4, - April 1995 STUTTGART DE, Seiten 358-360, XP002068994<br>* das ganze Dokument *<br>--- | 1-13 | RECHERCHIERTE SACHGEBIETE (Int.Cl.6)<br>C07F<br>B01J<br>C07B |
| X | ROUCOUX A ET AL: "New alkylarylamidophosphinephosphinites as chiral diphosphines for asymmetric hydrogenation of activated keto compounds" TETRAHEDRON: ASYMMETRY (TASYE3,09574166);93; VOL.4 (11); PP.2279-82, UNIV. SCI. TECHNOL. LILLE;LAB. CHIM. ORG. APPL.; VILLENEUVE D'ASCQ; 59652; FR. (FR), XP002068995<br>* das ganze Dokument *<br>---<br>-/-- | 1-13 | |

Der vorliegende Recherchenbericht wurde für alle Patentansprüche erstellt

| Recherchenort | Abschlußdatum der Recherche | Prüfer |
|---|---|---|
| DEN HAAG | 23.Juni 1998 | Beslier, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

Europäisches Patentamt

# EUROPÄISCHER RECHERCHENBERICHT

Nummer der Anmeldung
EP 98 10 3615

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 443 923 A (ATOCHEM) 28.August 1991<br>* das ganze Dokument *<br>----- | 1-13 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 23.Juni 1998 | Beslier, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)